Europäisches Patentamt

European Patent Office

Office européen des brevets

(11) Publication number: **0 161 035**
**B1**

(12) **EUROPEAN PATENT SPECIFICATION**

(45) Date of publication of patent specification: **20.04.88**

(51) Int. Cl.⁴: **B 32 B 27/20, C 08 J 11/06**

(21) Application number: **85200686.5**

(22) Date of filing: **29.04.85**

(54) **Laminated sheet.**

(30) Priority: **02.05.84 US 606050**

(43) Date of publication of application:
**13.11.85 Bulletin 85/46**

(45) Publication of the grant of the patent:
**20.04.88 Bulletin 88/16**

(84) Designated Contracting States:
**AT BE CH DE FR GB IT LI LU NL SE**

(56) References cited:
**EP-A-0 000 558**
**EP-A-0 084 922**
**DE-A-2 144 536**
**FR-A-2 361 223**

(73) Proprietor: SHELL INTERNATIONALE
RESEARCH MAATSCHAPPIJ B.V.
Carel van Bylandtlaan 30
NL-2596 HR Den Haag (NL)

(72) Inventor: **Coffman, Paul Mahoney**
**1819 Cherry Bend Drive**
**Houston Texas 77077 (US)**

(74) Representative: **Aalbers, Onno et al**
**P.O. Box 302**
**NL-2501 CH The Hague (NL)**

Courier Press, Leamington Spa, England.

# 0 161 035

## Description

The present invention is concerned with laminated sheet made by coextrusion of layers of ethylene-vinyl alcohol copolymer (EVAL), adhesive, polypropylene and a reground blend of ethylene-vinyl alcohol copolymer, adhesive, polypropylene and inorganic mineral filler which disperses within the regrind. The laminated sheets can be used for the formation of articles such as plastic cups by methods, comprising thermoforming, deep-drawing, solid phase forming, compression forming and the like.

Heretofore, in formation methods coextruded polyolefins sheets have been subject to problems of a delamination or separation of the layers. Delamination has the adverse effects of a) unsightly defects, b) loss of part stiffness and c) loss of impact resistance. Typical, for example, is regrind which contains scrap of polypropylene, ethylene-vinyl alcohol copolymer and adhesive. Such regrind has materials of both high and low viscosity, which tend to separate when subjected to shear forces in a sheeting or film die. The ethylene-vinyl alcohol copolymer at high shear rates is of higher viscosity than the other components and tends to move towards the centre of the layer.

Multilayer sheet containing a layer of oxygen barrier polymer, such as EVAL, as well as layers of adhesive and polypropylene are commercially thermoformed into food containers for use in storing shelf stable oxygen sensitive foods. The unused web of sheet usually represents 30—50% of the sheet fed and is recovered for reuse. It has been found that this scrap upon regrinding and reextrusion forms a sheet which delaminates too readily upon flexing. This is believed to be due to a phase separation of the incompatible EVAL and polypropylene in the high shear field inside the sheeting die.

The present invention provides for a regrind layer which comprises polypropylene, ethylene-vinyl alcohol copolymer, adhesive and an amount of an inorganic mineral filler which will disperse within the regrind to give the coextruded sheet good lamination properties. Accordingly, the invention relates to a process for making a laminated sheet, comprising the steps of:

reginding scrap sheet material which contains polypropylene, ethylene-viknyl alcohol copolymer and adhesive;

adding to said scrap sheet regrind an inorganic mineral filler which will disperse with said regrind in an amount sufficient to prevent delamination between layers of said laminated sheet;

coextruding said filler containing regrind with ethylene vinyl alcohol copolymer, adhesive, and polypropylene into a 7-layer laminated sheet, the inner core thereof comprising ethylene-vinyl alcohol copolymer, the adjoining sub-core layers comprising adhesive and the surface and sub-surface layers comprising polypropylene, respectively regrind composition or the same in reversed order.

In particular, the regrind layer comprises from 60 to 80%wt of polypropylene, from 15 to 25%wt of ethylene-vinyl alcohol copolymer, from 15 to 25%wt of adhesive and 20 to 40%wt of inorganic mineral filler, 100%wt being the weight of the regrind layer.

The regrind layer composition is unique in that the inclusion of inorganic mineral filler, preferably calcium carbonate $(CaCO_3)$ or talc, works with the propylene, ethylene-vinyl alcohol copolymer and adhesive to prevent internal delamination in the regrind-layer.

In preferred laminates, the ethylene-vinyl alcohol copolymer layer comprises from 0.5 to 25%wt, the adhesive layer comprises from 0.5 to 15%wt, the polypropylene layer comprises from 25 to 95%wt and the regrind layer comprises from 5 to 75%wt, all weight percentages being calculated on the weight of the laminate. In the most preferred laminates the ethylene-vinyl alcohol layer comprises preferably 5 to 15%wt, the adhesive layer comprises preferably from 3 to 7%wt adhesive, the polypropylene layer comprises from 30 to 60%wt and the regrind layer comprises from 50 to 95%wt, all percentages by weight being calculated on the weight of the laminate.

The inorganic mineral filler should be selected among inorganic mineral fillers which will evenly disperse among the polypropylene, ethylene-vinyl alcohol, and adhesive of the regrind layer in order to give the present invention its unique properties.

The adhesive may be any suitable adhesive but is preferably selected from the group of EVA's, ionomers, thermoplastic rubbers such as KRATON®, available from Shell Chemical Company, Houston, Texas and, preferably, polypropylenes or polyethylenes modified with polar compounds such as maleic anhydride or acrylic acid.

Coextrusion technology to produce the laminates of the invention is known to those skilled in the art, one method employs 4 separate, annular concentric extrusion dies (blow extrusion) and flattening of the 4 tubular films so obtained. Alternatively straight slit extrusion, followed by adhering one laminate layer to the other one may be employed as well.

### Example 1 (for comparison)

As shown in Table 1 below, a scrap control was prepared from dry blended 64% by weight commercial polypropylene (Grade 5524 sold by Shell Chemical Co., Houston, Texas), 18%wt ethylene-vinyl alcohol copolymer (EVAL® E, from Kurraray of Japan) and 18%wt Plexar 2110 adhesive, from Chemplex Co., USA. Each of these was dry tumbled at 150 rpm in as pellets and the pellets were mixed with a one stage mixing screw. It will be seen in Table 1 that the expected undesirable delamination occurred when the blend was converted into sheet by conventional sheet extrusion onto a three roll cooling stack.

2

**0 161 035**

TABLE 1

COMPOSITON OF SCRAP CONTROL

| %, by weight | Composition | Free of Delamination |
|---|---|---|
| 64 | PP 5524 | |
| 18 | EVAL E | No |
| 18 | PLEXAR 2110 | |

Example 2

Table 2 shows the compositions of various scrap blends and delamination test results which were prepared in accordance with the above method. Each of the formulations in Table 2 represent potential compatiblizers which were dry blended with the scrap and transformed into sheet by extension. Formulation No. 1 contained $CaCO_3$. Formulation Nos. 2—8 did not contain any $CaCO_3$. Formulation No. 1 contains 62%wt of the scrap referred to in Example 1, 38%wt WBS 139, from Shell Chemical Co., Houston, Texas. WBS 139 contains 80%wt $CaCO_3$ and 20%wt of polybutene-1. Formulation No. 1 was free of delamination.

All of formulations Nos. 2—5 delaminated.

TABLE 2

DELAMINATION OF PARTICULAR SCRAP BLENDS

| FORMULATION NUMBER | COMPOSITION | %, BY WEIGHT | FREE OF DELAMINATION |
|---|---|---|---|
| 1 | Scrap<br>WBS 139 | 62<br>38 | YES |
| 2* | Scrap<br>KRATON GX 2705 | 80<br>20 | NO |
| 3* | Scrap<br>KRATON DX 1300 | 85<br>15 | NO |
| 4*<br>5* | Scrap<br>KRAYTON GX 1855 | 85<br>15 | NO |

* for comparison

Example 3

Scrap blends containing various amounts of $CaCO_3$ were tested for delamination. Compositions ranged from 0% by weight $CaCO_3$ in control Formulation No. 1 to 40%wt $CaCO_3$ in Formulation No. 7. It may be noted from Table 3 that delamination occurred up to, and including, Formulation No. 4, which formulation contained 15%wt $CaCO_3$. Formulation Nos. 5, 6 and 7 which contained 20%wt, 20%wt and 40%wt $CaCO_3$, respectively, were free of delamination, however, indicating that an amount of $CaCO_3$ of at least 20%wt will prevent delamination. Multiflex® $CaCO_3$, made by Pfizer, is a different grade of calcium carbonate which consists of finer particle size.

3

TABLE 3

DELAMINATION OF SCRAP BLENDS CONTAINING $CaCO_3$

| NUMBER | COMPOSITION | %, BY WEIGHT | % BY WEIGHT $CaCO_3$ | FREE OF DELAMINATION |
|---|---|---|---|---|
| 1') | PP 5524 | 64.0 | | |
| | EVALE E | 18.0 | | |
| | PLEXAR 2110 | 18.0 | 0.0 | NO |
| 2') | Scrap | 93.7 | | |
| | *WBS 139 | 6.3 | 5.0 | NO |
| 3') | Scrap | 87.5 | | |
| | WBS 139 | 12.5 | 10.0 | NO |
| 4') | Scrap | 81.0 | | |
| | WBS 139 | 19.0 | 15.0 | NO |
| 5 | Scrap | 75.0 | | |
| | WBS 139 | 25.0 | 20.0 | YES |
| 6 | Scrap | 50.0 | | |
| | Multiflex® $CaCO_3$ | 50.0 | 20.0 | YES |
| 7 | Scrap | 50.0 | | |
| | WBS 139 | 50.0 | 40.0 | YES |

* WBS 139 = 20% Polybutene-1, 80% $CaCO_3$
') for comparison

Example 4

Table 4, below, reveals delamination tests of scrap blends comprising talc as inorganic mineral filler. Formulation 1 is a dry blend of 50%wt scrap (74% polypropylene 5524, 18% Plexar® and 18% EVAL®), 30%wt of polypropylene and 20%wt of talc.

TABLE 4

DELAMINATION OF SCRAP BLENDS CONTAINING TALC

| COMPOSITION | FREE OF DELAMINATION |
|---|---|
| Scrap/PP 20%wt talc | YES |
| EVAL/PP 20%wt talc | YES |

**Claims**

1. A process for making a laminated sheet, comprising the step of:
   regrinding scrap sheet material which contains polypropylene, ethylene-vinyl alcohol copolymer and adhesive;
   adding to said scrap sheet regrind an inorganic mineral filler which will disperse with said regrind in an amount sufficient to prevent delamination between layers of said laminated sheet;
   coextruding said filler containing regrind with ethylene vinyl alcohol copolymer, adhesive, and polypropylene into a 7-layer laminated sheet, the inner core thereof comprising ethylene-vinyl alcohol copolymer, the adjoining sub-core layers comprising adhesive and the surface and sub-surface layers comprising polypropylene, respectively regrind composition or the same in reversed order.

2. A process as claimed in claim 1 in which the regrind composition comprises from 60 to 80%wt polypropylene, from 15 to 25%wt ethylene-vinyl alcohol copolymer, from 15 to 25%wt adhesive, and from 20 to 40%wt inorganic mineral filler.

3. A process as claimed in claim 1 or 2, in which the adhesive is selected from ethylene-vinyl alcohol copolymer, ionomers, thermoplastic rubbers, and polypropylenes and polyethylenes modified with polar compounds such as maleic anhydride.

4. A process as claimed in any of claim 1 to 3, in which the inorganic mineral filler is $CaCO_3$ or talc.

5. A method for making a formed article which comprises thermoforming, deepdrawing, solid-phase forming, or compression forming of a laminated sheet produced by a process as claimed in claims 1 to 4.

### Patentansprüche

1. Verfahren zur Herstellung einer Verbundbahn, umfassend die folgenden Stufen:

— Wiederaufbereiten von Bahnenmaterialabfall, der Polypropylen, Ethylen-Vinylalkohol-Copolymer und Klebstoff enthält;

— Zusetzen eines anorganischen Mineralfüllstoffes, der sich in dem wiederaufbereiteten Material dispergieren wird, zu diesem wiederaufbereiteten Bahnenabfall, in einer Menge, die zur Verhinderung einer Delamination zwischen Schichten der genannten Verbundbahn ausreicht;

— Coextrudieren dieses füllstoffhaltigen wiederaufbereiteten Materials mit Ethylen-Vinylalkohol-Copolymer, Klebstoff und Polypropylen zu einer siebenschichtigen Verbundbahn, wobei deren innerster Kern Ethylen-Vinylalkohol-Copolymer umfaßt, die anschließenden Nebenkernschichten Klebstoff umfassen und die Oberflächenschichten und die unter der Oberfläche liegenden Schichten Polypropylen bzw. die wiederaufbereitete Zusammensetzung oder diese in umgekehrter Reihenfolge umfassen.

2. Verfahren nach Anspruch 1, worin die wiederaufbereitete Zusammensetzung von 60 bis 80 Gew.-% Polypropylen, von 15 bis 25 Gew.-% Ethylen-Vinylalkohol-Copolymer, vin 15 bis 25 Gew.-% Klebstoff und von 20 bis 40 Gew.-% anorganischen Mineralfüllstoff umfaßt.

3. Verfahren nach Anspruch 1 oder 2, worin der Klebstoff unter Ethylen-Vinylalkohol-Copolymeren, Ionomeren, thermoplastischen Kautschuken und Polypropylen und Polyethylenen, die mit polaren Verbindungen wie Maleinsäureanhydrid modifiziert sind, ausgewählt ist.

4. Verfahren nach einem der Ansprüche 1 bis 3, worin der anorganische Mineralfüllstoff $CaCO_3$ oder Talk ist.

5. Verfahren zur Herstellung eines geformten Artikels, welches ein Thermoformen, Tiefziehen, Festphasenverformen oder Formpressen einer Verbundbahn, hergestellt nach einem Verfahren der Ansprüche 1 bis 4, umfaßt.

### Revendications

1. Un procédé de production d'une feuille stratifiée, comprenant les étapes qui consistent à:

rebroyer des déchets d'une de matière en feuille qui contient du polypropylène, du copolymère éthylène-alcool vinylique et un adhésif;

ajouter à ces déchets de matière en feuille rebroyés une charge minérale inorganique qui se dispersera dans la matière rebroyée en quantité suffisante pour empêcher une déstratification entre les couches de la feuille stratifiée;

coextruder la matière rebroyée contentant la charge avec du copolymère éthylène-alcool vinylique, de l'adhésif et du polypropylène, de manière à former une feuille stratifiée à sept couches, la couche centrale comprenant du copolymère éthylène-alcool vinylique, les couches adjacentes à la couche centrale comprenant de l'adhésif et les couches de surface et les couches adjacentes aux couches de surface comprenant du polypropylène et de la composition rebroyée, respectivement, ou ces mêmes constituants dans l'ordre inverse.

2. Un procédé selon la revendication 1, dans lequel la composition rebroyée comprend de 60 à 80% en poids de polypropylène, de 15 à 25% en poids de copolymère éthylène-alcool vinylique, de 15 à 25% en poids d'adhésif et de 20 à 40% en poids de charge minérale inorganique.

3. Un procédé selon la revendication 1 ou 2, dans lequel l'adhésif est choisi parmi un copolymère éthylène-alcool vinylique, des ionomères, des caoutchoucs thermoplastiques et des polypropylènes et polyéthylènes modifiés par des composés polaires tels que l'anhydride maléique.

4. Un procédé selon l'une quelconque des revendications 1 à 3, dans lequel la charge minérale inorganique est $CaCO_3$ ou du talc.

5. Un procédé de production d'un article de forme déterminée, qui comprend le thermoformage, l'emboutissage, le formage en phase solide ou le formage par compression d'une feuille stratifiée produite par un procédé selon les revendications 1 à 4.